# EUROPÄISCHE PATENTSCHRIFT

(11) **EP 3 741 766 B1**
(45) Veröffentlichungstag und Bekanntmachung des Hinweises auf die Patenterteilung: **31.08.2022**
(21) Anmeldenummer: 19176586.6
(22) Anmeldetag: 24.05.2019
(51) Int. Cl.: C07F 7/21, C08G 18/72, B01J 27/182, C08G 18/08, C08G 18/09, C08G 18/73, C08G 18/75, C08G 18/79, C08G 18/16

(54) **NEUE KATALYSATOREN FÜR DIE SYNTHESE VON OLIGOMEREN ISOCYANATEN**
NEW CATALYSTS SUITABLE FOR THE SYNTHESIS OF OLIGOMERIC ISOCYANATES
NOUVEAUX CATALYSEURS POUR LA SYNTHÈSE D'ISOCYANATES OLIGOMÈRES

(43) Veröffentlichungstag der Anmeldung: 25.11.2020
(73) Patentinhaber: Covestro Intellectual Property GmbH & Co. KG, 51373 Leverkusen (DE)
(72) Erfinder: RICHTER, Frank, 51373 Leverkusen (DE); KUNER, Maximillian, 12524 Berlin (DE); MEISENHEIMER, Richard, 51065 Köln (DE)
(74) Vertreter: Levpat

(56) Entgegenhaltungen:
- DE-A1- 2 837 770
- DE-A1-102005 058 835

## Beschreibung

Die vorliegende Erfindung betrifft neuartige Katalysatoren zur Herstellung oligomerer Polyisocyanate. Diese Katalysatoren enthalten polyedrische Silsesquioxane, an welche zyklische Phosphor-(III)- oder Phosphor-(V)-Verbindungen gekoppelt sind.

Polyhedrische Silsesquioxane als solche sind beispielsweise aus WO 2011/107417 bekannt. Die DE 10 2005 058835 A1 beschreibt ein Verfahren zur Herstellung von Carbodiimid- (CD) und/oder Uretonimin- (UI) Gruppen enthaltenden Polyisocyanaten. Die DE 28 37 770 A1 beschreibt Carbodiimidgruppen aufweisende Polyisocyanate. Im Stand der Technik werden Phosphine wie z.B. das Tributylphosphin, zur Herstellung oligomerer Polyisocyanate verwendet. Der Einsatz von Phospholanen und Phobanen zu diesem Zweck ist ebenfalls grundsätzlich, beispielsweise aus der EP 2 100 885 A1, bekannt.

Um die Oligomerisierungsreaktion zu beenden, beschreibt der Stand der Technik die Inaktivierung des Katalysators durch Veränderung seiner chemischen Struktur, z.B. durch Oxidation. Dies ist - abhängig von der chemischen Struktur des Katalysators - nicht immer einfach. Der Katalysator bleibt in inaktivierter Form Teil des Produktgemisches und kann sich bei der weiteren Verarbeitung des Reaktionsprodukts nachteilig auswirken. Außerdem ist ein im Produkt enthaltener inaktivierter Katalysator nicht wiederverwendbar. Dies kann abhängig vom Preis des betreffenden Katalysators ökonomisch nachteilig sein.

Aus diesem Grund bestand ein Bedarf nach neuartigen Verbindungen, welche die Oligomerisierung von Isocyanaten katalysieren und auf einfache Weise in aktiver Form vom Reaktionsprodukt abgetrennt werden können.

Diese Aufgabe wird durch die in den Patentansprüchen und weiter unten in dieser Beschreibung offenbarten Ausführungsformen der vorliegenden Erfindung gelöst. Sofern sich aus dem Kontext nicht eindeutig das Gegenteil ergibt, können sie beliebig kombiniert werden.

In einer ersten Ausführungsform betrifft die vorliegende Erfindung eine Polyedrische Verbindung der allgemeinen Formel (I)

[(R¹SiO_{3/2})ₙ₋₁(R²SiO_{3/2})]ₙ (I)

worin
n für eine grade Zahl von 6 bis 18, vorzugsweise 6 bis 12, besonders bevorzugt 6 bis 10 und ganz besonders bevorzugt 8 steht,
jeder Rest R¹ unabhängig voneinander
   ein verzweigter oder unverzweigter C₁₋₂₀-Alkylrest, vorzugsweise C₁₋₁₀-Alkyl, besonders bevorzugt C₁₋₆-Alkyl und ganz besonders bevorzugt iso-Butyl,
   ein verzweigter oder unverzweigter C₁₋₂₀-Alkenylrest, vorzugsweise C₁₋₁₀-Alkenyl, besonders bevorzugt C₁₋₆-Alkenyl,
   ein verzweigter oder unverzweigter C₁₋₂₀-Alkinylrest, vorzugsweise C₁₋₁₀-Alkinyl, besonders bevorzugt C₁₋₆-Alkinyl,
   ein C₄₋₁₂-Cycloalkylrest, vorzugsweise C₄₋₈-Cycloalkyl, besonders bevorzugt C₄₋₆-Cycloalkyl,
   ein C₁₋₂₀-Oxoalkylrest,
   ein C₆₋₁₈ Arylrest, vorzugsweise C₆₋₁₂-Aryl, besonders bevorzugt C₆₋₁₀ Aryl, optional jeweils substituiert mit einem Heteroatom,
   ein Oxoarylrest,
   ein Hetarylrest,
   ein Perfluor-alkyl, -alkenyl, -alkinyl oder -arylrest,
      oder
   ein Arylalkylenrest ist, und
R² für ein Strukturelement der Formel (II) steht 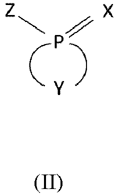 worin
   Z ausgewählt ist aus der Gruppe bestehend aus (CR³₂)ₘ, *ortho-, meta-* oder *para*-C₆R³₄, C₆R³₄CR³₂, (CR³₂)₂-Si(R³₂)-(CR³₂)ₒ, C₄₋₁₂-Cycloalkylen,
   Und wobei m für eine natürliche Zahl von 1 bis 15, bevorzugt 1 bis 10 und stärker bevorzugt 2 bis 5 steht, besonders bevorzugt für 3 oder 4,
   o für eine natürliche Zahl von 1 bis 4 steht,
   R³ für gleiche oder verschiedene Substituenten ausgewählt aus der Gruppe bestehend aus H, Methyl und Ethyl steht, bevorzugt für H;
X für ein freies Elektronenpaar oder O-Atom steht;
Y für C₄₋₂₀-Alkylen steht, vorzugsweise C₄₋₁₆-Alkylen, besonders bevorzugt C₄₋₁₀-Alkylen, oder
Y für ein polycyklisches C₆₋₃₀-Alkylen steht, vorzugsweise bicyclisches C₆₋₁₀-Alkylen.

Hierbei ist die Substitution von einem oder mehreren C-Atomen durch O- oder S-Atom optional, wobei das O- oder S-Atom nicht direkt an das P-Atom gebunden ist. Weiterhin kann Y eine oder mehrere Doppelbindungen zwischen zwei C-Atomen des C₄₋₂₀-Alkylen-Rests, vorzugsweise des C₄₋₁₆-Alkylen-Rests und besonders bevorzugt des C₄₋₁₀-Alkylen-Rests enthalten. Auch der polycyklische C₆₋₃₀-Alkylen-Rest, vorzugsweise der bicyclische C₆₋₁₀ Alkylen-Rest kann eine oder mehrere Doppelbindungen enthalten. Weiterhin kann Y verzweigt und/oder substituiert sein, hierbei sind gleiche oder verschiedene Reste ausgewählt aus der Gruppe bestehend aus H, Methyl und Ethyl bevorzugt.

In den Strukturelementen der Formel (II) ist Z ein divalenter Rest, der ein Siliziumatom der polyedrischen Verbindung der allgemeinen Formel (I) mit dem Phosphoratom der Formel (II) verbindet.

In besonders bevorzugten Ausführungsformen der Erfindung ist Y C₄-Alkylen oder bicyclisches C₈-Alkylen.

Polyedrische Verbindungen der allgemeinen Formel (I) sind auch unter der Bezeichnung Silsesquioxane mit Käfigstrukturen bekannt. Diese können eine Eckenzahl von n= 6 bis n= 18 Ecken aufweisen. Ganz besonders bevorzugt ist die würfelförmige Struktur mit n=8.

Polyedrische Verbindungen der allgemeinen Formel (I) können für R¹ jeweils unterschiedliche Substituenten R¹ wie vorstehend definiert aufweisen, vorzugsweise ist R¹ gleich. In einer bevorzugten Ausführungsform steht R¹ in Formel (I) für Isobutyl.

Bevorzugte Strukturelemente der Formel (II), bei denen X ein freies Elektronenpaar ist, sind ausgewählt aus der Gruppe bestehend aus 1-Methylen-1-phospholan, 1-Ethylen-1-phospholan, 1-Propylen-1-phospholan, 1-Butylen-1-phospholan, 1-Pentylen-1-phospholan, 1-Hexylen-1-phospholan, 1-Octylen-1-phospholan, 1-Phenylen-1-phospholan, 9-Methylen-9-phosphabicyclononan, 9-Ethylen-9-phosphabicyclononan, 9-Propylen-9-phosphabicyclononan, 9-Butylen-9-phosphabicyclononan, 9-Pentylen-9-phosphabicyclononan, 9-Hexylen-9-phosphabicyclononan, 9-Octylen-9-phosphabicyclononan, 9-Dodecylen-9-phosphabicyclononan, 9-Eicosylen-9-phosphabicyclononan und 9-Phenylen-9-phosphabicyclononan,

Bevorzugte Strukturelemente der Formel (II), bei denen X ein Sauerstoffatom ist sind ausgewählt aus der Gruppe bestehend aus
1-Propylen-1-phospholanoxid, 1-Butylen-1-phospholanoxid, 1-Phenylen-1-phospholanoxid,
9-Propylen-9-phosphabicyclononanoxid, 9-Butylen-9-phosphabicyclononanoxid, 9-Phenylen-9-phosphabicyclononanoxid,
1-Propylen-3-methyl-1-phospholanoxid, 1-Butylen-3-methyl-1-phospholanoxid, 1-Phenylen-3-methyl-1-phospholanoxid,
1-Propylen-3,4-dimethyl-1-phospholanoxid, 1-Butylen-3,4-dimethyl-1-phospholanoxid, 1-Phenylen-3,4-dimethyl-1-phospholanoxid,
1-Propylen-1-phosphol-2-enoxid, 1-Butylen-1-phosphol-2-enoxid, 1-Phenylen-1-phosphol-2-enoxid, 1-Propylen-1-phosphol-3-enoxid, 1-Butylen-1-phosphol-3-enoxid, 1-Phenylen-1-phosphol-3-enoxid,
1-Propylen-3-methyl-1-phosphol-2-enoxid, 1-Butylen-3-methyl-1-phosphol-2-enoxid, 1-Phenylen-3-methyl-1-phosphol-2-enoxid,
1-Propylen-3-methyl-1-phosphol-3-enoxid, 1-Butylen-3-methyl-1-phosphol-3-enoxid, 1-Phenylen-3-methyl-1-phosphol-3-enoxid,
1-Propylen-3,4-dimethyl-1-phosphol-2-enoxid, 1-Butylen-3,4-dimethyl-1-phosphol-2-enoxid, 1-Phenylen-3,4-dimethyl-1-phosphol-2-enoxid,
1-Propylen-3,4-dimethyl-1-phosphol-3-enoxid, 1-Butylen-3,4-dimethyl-1-phosphol-3-enoxid, 1-Phenylen-3,4-dimethyl-1-phosphol-3-enoxid
in bezüglich der Substitution am Segment Y isomerenreiner Form oder als beliebige Gemische untereinander.

In einer weiteren Ausführungsform betrifft die vorliegende Erfindung die Verwendung der oben definierten Verbindung gemäß Formel (I) zur Oligomerisierung von Isocyanaten.

Für die erfindungsgemäße Verwendung wird die Verbindung nach Formel (I) vorzugsweise so eingesetzt, dass ihr Mengenanteil bezogen auf die Gesamtmenge der eingesetzten Isocyanate in Mol zwischen 5 ppm und 10 % liegt

Der Begriff "Oligomerisierung von Isocyanaten" bezeichnet alle Prozesse, bei denen höhermolekulare Oligomerengemischen mit Uretdion-, Isocyanurat-, Carbodiimid und/oder Iminooxadiazindionstrukturen im Molekülgerüst entstehen. Somit liegen der Oligo- bzw. Polymerisierung von Isocyanaten prinzipiell die gleichen chemischen Reaktionen zugrunde. Die Umsetzung einer kleineren Anzahl von Isocyanaten miteinander bezeichnet man als Oligomerisierung. Die Umsetzung einer größeren Anzahl von Isocyanaten bezeichnet man als Polymerisierung. Eine Oligomerisierung im Sinne dieser Anmeldung liegt vor, wenn wenigstens 90 Mol-% der entstehenden Reaktionsprodukte aus höchstens 15, bevorzugt höchstens 10 Monomeren aufgebaut sind.

Bei Verwendung von Katalysatoren, in denen in Formel (II) X ein freies Elektronenpaar ist, wird vorzugsweise wenigstens eine Struktur ausgewählt aus der Gruppe bestehend aus Isocyanurat, Iminooxadiazindion, Uretdion gebildet und besonders bevorzugt wird wenigstens eine Isocyanuratstruktur gebildet. Ebenfalls bevorzugt ist es, dass die Verbindung der Formel (I) in denen in Formel (II) X ein freies Elektronenpaar ist in einer Reaktionslösung umfassend eine polare und eine unpolare Phase eingesetzt wird.

Bei Verwendung von Katalysatoren, in denen in Formel (II) X Sauerstoff ist, erfolgt die Umsetzung vorzugsweise unter Ausbildung einer Carbodiimidstruktur. Es ist besonders bevorzugt, dass wenigstens 90 % der insgesamt gebildeten vernetzenden Strukturen Carbodiimidgruppen sind.

Grundsätzlich sind die erfindungsgemäßen Katalysatoren zur Oligomerisierung aller bekannten Isocyanate geeignet, d.h. sie können zur Oligomerisierung von Isocyanaten mit aliphatisch, cycloaliphatisch, araliphatisch und aromatisch gebundenen Gruppen verwendet werden. Bevorzugt werden sie für die Oligomerisierung von Mono- und/oder Diisocyanaten eingesetzt.

Bei einem Isocyanat mit aliphatisch gebundenen Isocyanatgruppen sind alle Isocyanatgruppen an ein sp³-hybridisiertes Kohlenstoffatom gebunden. Bevorzugte Polyisocyanate mit aliphatisch gebundenen Isocyanatgruppen sind n-Butylisocyanat und alle Isomeren davon, n-Pentylisocyanat und alle Isomeren davon, n-Hexylisocyanat und alle Isomeren davon, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan und 1,10-Diisocyanatodecan.

Bei einem Isocyanat mit cycloaliphatisch gebundenen Isocyanatgruppen ist mindestens eine der Isocyanatgruppen an Kohlenstoffatome gebunden, die Teil eines geschlossenen Rings aus Kohlenstoffatomen sind. Dieser Ring kann an einer oder mehreren Stellen ungesättigt sein, solange er durch das Vorliegen von Doppelbindungen keinen aromatischen Charakter erhält. Bevorzugte Polyisocyanate mit cycloaliphatisch gebundenen Isocyanatgruppen sind Cyclohexylisocyanat, 1,3und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan Isophorondiisocyanat; (IPDI), 1-Isocyanato-1-methyl-4(3)-isocyanatomethylcyclohexan, 2,4'- und/oder 4,4'-Diisocyanatodicyclohexylmethan(H12MDI), 1,3-und/oder 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyl-dicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Bei einem Isocyanat mit araliphatisch gebundenen Isocyanatgruppen sind alle Isocyanatgruppen an Alkylenreste gebunden, der ihrerseits an einen aromatischen Ring gebunden sind. Bevorzugte Polyisocyanate mit araliphatisch gebundenen Isocyanatgruppen sind 1,3- und 1,4-Bis-(isocyanatomethyl)benzol (Xylendiisocyanat; XDI), 1,3- und 1,4-Bis(1-isocyanato-1-methyl¬ethyl)-benzol (TMXDI) und Bis(4-(1-isocyanato-1-methylethyl)phenyl)-carbonat.

Bei einem Isocyanat mit aromatisch gebundener Isocyanatgruppe sind alle Isocyanatgruppen direkt an Kohlenstoffatome gebunden, die Teil eines aromatischen Ringes sind. Bevorzugte Isocyanate mit aromatisch gebundenen Isocyanatgruppen sind 2,4- und 2,6-Diisocyanatotoluol (TDI), 2,4'-und 4,4'-Diisocyanatodiphenylmethan (MDI) und 1,5-Diisocyanatonaphthalin.

Soweit es gewünscht ist, oligomere Polyisocyanate herzustellen, die aus mehr als einem Isocyanat aufgebaut sind, können für die Oligomerisierung auch beliebige Gemische der vorgenannten Isocyanate verwendet werden.

Die der vorliegenden Erfindung zugrunde liegende Studie hat gezeigt, dass die erfindungsgemäßen Katalysatoren in unpolaren Lösemitteln löslich sind, in denen oligomere Isocyanate nicht oder nur schlecht löslich sind. Dies ermöglicht die Entfernung des Katalysators aus dem Reaktionsgemisch und, wenn gewünscht, seine Rückgewinnung in aktiver Form.

Deswegen betrifft die vorliegende Erfindung in einer weiteren Ausführungsform ein Verfahren zur Herstellung einer Polyisocyanatzusammensetzung enthaltend oligomere Polyisocyanate enthaltend die Schritte
a) Bereitstellen eines Reaktionsgemisches enthaltend wenigstens eine Verbindung gemäß der allgemeinen Formel (I) wie oben definiert und wenigstens ein Isocyanat;
b) Umsetzung des wenigstens einen Isocyanats zu einem oligomeren Polyisocyanat;
c) Extraktion der Verbindung gemäß Formel (I) aus dem Reaktionsgemisch durch Extraktion mit einem geeigneten Lösemittel A.

Alle weiter oben zur Struktur der erfindungsgemäßen Katalysatoren und zu ihrer Verwendung gegebenen Definitionen gelten auch für diese Ausführungsform.

Das in Verfahrensschritt a) bereitgestellte Reaktionsgemisch enthält wenigstens ein Isocyanat. Es kann aber auch, wie bereits oben ausgeführt, ein Gemisch unterschiedlicher Isocyanate enthalten. Es enthält wenigstens eine Verbindung gemäß Formel (I). Die Anwesenheit weiterer Verbindungen, welche die Oligomerisierung von Isocyanaten katalysieren, aber nicht unter Formel (I) fallen, ist erfindungsgemäß grundsätzlich möglich. Um die Vorteile der Erfindung vollständig zu realisieren, ist es bevorzugt, dass solche Verbindungen höchstens 0,5 Gew.-%, stärker bevorzugt höchstens 0,1 Gew.-% des Reaktionsgemisches ausmachen.

Es ist bevorzugt, dass das molare Verhältnis der Verbindung gemäß Formel (I) und der Gesamtmenge aller Isocyanate im in Verfahrensschritt a) bereitgestellten Reaktionsgemisch zwischen 5 ppm und 10 % liegt, wobei die Stoffmenge der Verbindung nach Formel (I) in Mol Phosphor und die Stoffmenge aller enthaltenen Isocyanate in Mol NCO bestimmt werden. Geeignete Analyseverfahren sind dem Fachmann bekannt.

Der Verfahrensschritt der "Bereitstellung" des Reaktionsgemisches endet mit einer möglichst homogenen Mischung der darin enthaltenen Komponenten. Dieses Ergebnis kann durch alle im Stand der Technik geläufigen und für die vorliegenden Komponenten geeigneten Mischverfahren erreicht werden. Hierbei ist es bevorzugt, den Katalysator vor der Zugabe zum Isocyanat in einem geeigneten Lösemittel zu lösen. Dieses sind insbesondere solche Lösemittel, die keine mit Isocyanatgruppen reaktive Gruppen enthalten und deren Siedepunkt über der in Verfahrensschritt herrschenden Reaktionstemperatur liegt. "Mit Isocyanat reaktive Gruppen" im Sinne der vorliegenden Patentanmeldung sind insbesondere Hydroxyl-, Amino- und Thiolgruppen gemeint. Weiter sind besagte Lösemittel dadurch gekennzeichnet, dass oligomere Polyisocyanate in ihnen schlecht löslich sind. Bevorzugt ist das Lösemittel A so ausgewählt, dass die in Verfahrensschritt b) gebildeten Oligomeren mit höchstens 10 Gew.-% darin löslich sind. Besonders bevorzugte Lösemittel sind verzweigte, unverzweigte und cyclische Alkane mit 6 bis 20 Kohlenstoffatomen, die bei Reaktionstemperatur flüssig sind.

Die "Umsetzung des wenigstens einen Isocyanats zu einem oligomeren Polyisocyanat" erfolgt durch Inkubation des Reaktionsgemisches bei einer geeigneten Temperatur. Diese Temperatur kann durch einfache Vorversuche für die jeweils spezifische Kombination von Isocyanat und Katalysator bestimmt werden. Grundsätzlich liegen die geeigneten Temperaturen im Bereich zwischen 40 °C und 220 °C. Abhängig vom verwendeten Katalysator sind hier unterschiedliche Temperaturbereiche besonders gut geeignet.

Bei Verwendung von Strukturelementen nach Formel (II), bei denen Z ein freies Elektronenpaar ist, zur Oligomerisierung aromatischer Isocyanate sind Temperaturen von wenigstens 20 °C bevorzugt. Wenn mit diesen Katalysatoren Isocyanate mit aliphatisch gebundenen Isocyanatgruppen oligomerisiert werden sollen, so sind Mindesttemperaturen von 40 °C bevorzugt. In jedem Fall sollte die Temperatur 200 °C, bevorzugt 150 °C nicht überschreiten.

Bei Verwendung von Strukturelementen nach Formel (II), bei denen Z Sauerstoff ist, wird unabhängig vom eingesetzten Isocyanat ein Temperaturbereich von 100 °C bis 220 °C, insbesondere von 140 °C bis 200 °C, bevorzugt.

Die Dauer des Verfahrensschrittes b) wird durch den gewünschten Umsetzungsgrad der Isocyanate bestimmt. Sie liegt bevorzugt im Bereich von 1 Stunden bis 48 Stunden. Die jeweilige Bestimmung des NCO-Gehaltes erfolgt titrimetrisch nach DIN EN ISO 11909:2007-05.

Im anschließenden Verfahrensschritt c) wird die Verbindung nach Formel (I) durch ein geeignetes Lösemittel A extrahiert. Insbesondere kommen alle oben beschriebenen Katalysatorlösemittel als Einzelsubstanz oder Gemisch in Frage.

Besonders bevorzugt ist die Extraktion mit ggf. verzweigten Alkanen. Bevorzugt werden bezogen auf die Masse des Reaktionsgemisches wenigstens 10 Gew.-% Lösemittel A zur Extraktion verwendet. Diese Extraktion in Verfahrensschritt c) wird wenigstens einmal durchgeführt. Eine mehrfache Durchführung ist aber ebenfalls möglich und kann bevorzugt sein.

Es ist bevorzugt, dass am Ende des Verfahrensschrittes c) wenigstens 90 Mol-% der zu Beginn des Verfahrensschrittes c) im Reaktionsgemisch vorliegenden Verbindung nach Formel (I) im Lösemittel A gelöst sind.

In einer weiteren Ausführungsform der vorliegenden Erfindung wird das erfindungsgemäße Verfahren zweiphasig durchgeführt. Zu dem oben definierten Reaktionsgemisch wird ein weiteres Lösemittel B, welches mit dem Reaktionsgemisch und dem zur Extraktion der Verbindung nach Formel (I) verwendeten Lösemittel A nicht mischbar ist zugegeben. Besagtes Lösemittel B kann die aus dem umzusetzenden Isocyanat gebildete Produktphase sein und wird ganz allgemein so ausgewählt, dass die entstehenden oligomeren Isocyanate darin besser löslich sind als im Lösemittel A, während die Verbindung nach Formel (I) darin erheblich schlechter löslich ist. So kann erreicht werden, dass während der Oligomerisierung die Reaktionsprodukte kontinuierlich in eine zweite Phase übergehen bzw. diese bilden (umgesetztes Isocyanat) in der wenig oder kein Katalysator vorliegt. So wird einerseits die Bildung von größeren Oligomeren unterdrückt und andererseits eine einfache Trennung der Reaktionsprodukte vom Katalysator ermöglicht.

Besonders bevorzugt ist ein Lösemittelpaar, das durch folgende Parameter gekennzeichnet ist:
Die Löslichkeit der Verbindung nach Formel (I) ist in Lösemittel A wenigstens um einen Faktor 10 höher als in Lösemittel B. Beispielhafte Lösemittel A sind Alkane, in denen die allgemein verfügbaren monomeren (Di)isocyanate löslich sind.

Weiterhin muss die Löslichkeit der in Verfahrensschritt b) gebildeten Oligomere im Lösemittel B wenigstens um den Faktor 10 höher als in Lösemittel A sein, was im bevorzugten Falle, wenn Lösemittel B die Produktphase ist, besonders problemlos möglich ist.

Neben den Verfahrensprodukten, sofern sie bei der angestrebten Reaktionstemperatur flüssig sind, sind aprotische, polare Lösemittel wie z.B. Acetonitril als Lösemittel B gut geeignet. Letzteres ist insbesondere für die Kombination mit ggf. verzweigten Alkanen als Lösemittel A geeignet. Weitere Kombinationen geeigneter aprotischer Lösemittel mit Mischungslücken sind aus der einschlägigen Fachliteratur und Tabellenwerken wie z.B. dem CRC Handbook of Chemistry and Physics bekannt (Beispiele hierfür: Diethylether (Lösemittel A) / Dimethylsulfoxid (Lösemittel B), Alkane (Lösemittel A) / Dimethylsulfoxid (Lösemittel B), Alkane (Lösemittel A) / Dimethylformamid (Lösemittel B), u.v.m.) und können zudem durch einfache Vortests ermittelt werden. Hierfür legt man das unpolare Lösemittel A bei der zu untersuchenden Temperatur, im einfachsten Fall bei Zimmertemperatur, vor und tropft unter Rühren so lange das potenziell nicht mischbare polare Lösemittel B zu, bis eine Entmischung beobachtet wird.

Als Lösemittel A und/oder B können erfindungsgemäß auch beliebige Mischungen eingesetzt werden, solange die entsprechenden Mischungen die vorstehenden Mischbarkeitseigenschaften aufweisen. Solche Mischungen umfassen beispielsweise Petroletherfraktionen. Insbesondere sind gängige Lacklösemittel wie beispielsweise n-Butylacetat, Methoxypropylacetat, Xylol, Solventnaptha, die an sich bei Zimmertemperatur keine Mischungslücke mit sehr unpolaren Lösemitteln wie z.B. Alkanen ausbilden, als Lösemittel B trotzdem geeignet, wenn sie in nur geringer Menge, bezogen auf die Menge an Lösemittel A, eingesetzt werden um die Viskosität der Produkt-führenden, Katalysator-armen Phase zu erniedrigen. Als vorstehend genannte "geringe Menge" werden vorzugsweise unter 30 Gew.-%, stärker bevorzugt unter 20 Gew.-%, noch stärker bevorzugt unter 10 Gew.-% und am stärksten bevorzugt unter 5 Gew.-%, verstanden.

Die vorliegende Erfindung offenbart ferner eine oligomere Polyisocyanatzusammensetzung enthaltend einen Gehalt an Phosphor unter 100 Gew.-ppm, bevorzugt zwischen 0 und 100 Gew.-ppm, besonders bevorzugt zwischen 0 und 50 Gew.-ppm und ganz besonders bevorzugt zwischen 0 und 20 Gew.-ppm, bezogen auf das Gesamtgewicht der oligomeren Polyisocyanatzusammensetzung. Anders ausgedrückt offenbart die vorliegende Erfindung eine oligomere Polyisocyanatzusammensetzung, erhältlich oder erhalten durch das erfindungsgemäße Verfahren und seine bevorzugten Ausführungsformen. Die offenbarte oligomere Polyisocyanatzusammensetzung ermöglicht die Kombination der Verwendung phosphorhaltiger Katalysatoren bei gleichzeitiger Vermeidung der Zugabe von Katalysatorgiften, die überwiegend im Produkt verbleiben.

Der Phosphorgehalt in ppm wird vorzugsweise durch Röntgenfluoreszenzanalyse (RFA) bestimmt.

Der NCO-Gehalt der vorstehend genannten, oligomeren Polyisocyanatzusammensetzung liegt bevorzugt zwischen 5 Gew.-% und 35 Gew.-%, stärker bevorzugt zwischen 10 Gew.-% und 30 Gew.-% und noch stärker bevorzugt zwischen 15 Gew.-% und 25 Gew.-%. Die Bestimmung des NCO-Gehaltes erfolgt titrimetrisch nach DIN EN ISO 11909:2007-05.

Besagte oligomere Isocyanatzusammensetzung enthält vorzugsweise zu wenigstens 90 Gew.-%, stärker bevorzugt wenigstens 95 Gew.-% aliphatische und/oder cycloaliphatische und/oder aromatische Isocyanate, bezogen auf die Gesamtmenge aller Isocyanate.

Die nachfolgenden Ausführungsbeispiele dienen nur dazu, die Erfindung zu illustrieren. Sie sollen den Schutzumfang der Patentansprüche in keiner Weise beschränken.

### Beispiele

Alle Beispiele wurden zur Verdeutlichung der erfindungsgemäßen Effekte mit Hexamethylendiisocyanat und seinen Oligomeren (Oligomerisierungsreaktionen mit P-III-Verbindungen) bzw. mit Bis-(4-isocyanatocyclohexyl)methan (Carbodiimidisierungen mit P-V-Verbindungen, P-Oxiden) durchgeführt. Dies soll keine Einschränkung auf die in den Beispielen beschriebenen Katalysatoren und Isocyanate bedeuten.

Alle %-Angaben beziehen sich, wenn nicht anders vermerkt, auf die Masse.

Mol% Angaben wurden mittels ¹H-NMR Spektroskopie ermittelt und beziehen sich, wenn nicht anders vermerkt, auf die Summe der Isocyanatfolgeprodukte. Sämtliche NMR-Messungen (¹H; ¹³C, ²⁹Si, ³¹P) erfolgten auf den Geräten Bruker Avance III HD-600 (600 MHz Protonenfrequenz) bzw. DRX 700 (700 MHz Protonenfrequenz) an ca. 1-2 %igen Lösungen in trockenem C₆D₆, wenn nicht anders vermerkt. Die chem. Verschiebung (in ppm) wurde auf das Signal nicht-deuterierter Reste im Lösemittel (C₆D₅H: 7,15 ppm; C₆D₆: 128,7 ppm) referenziert. ²⁹Si- bzw. ³¹P-NMR Spektren werden extern auf Me₄Si (0 ppm) bzw. 85%ige H₃PO₄ (0 ppm) referenziert.

Der NCO-Gehalt wurde titrimetrisch gemäß DIN EN ISO 10283:2007-11 bestimmt.

Größenausschlußchromatografie wurde gemäß DIN 55672-1:2016-03 und Tetrahydrofuran als Elutionslösemittel durchgeführt. Die mittels PSS-Standardkalibration erhaltenen Werte wurden zur Berechnung von Mn, Mw und D im Falle der HDI-Oligomeren rekalibriert (HDI, n=1: 168,2 g/mol, HDI-Dimer, n=2: 336,4 g/mol; HDI-Trimere, n=3: 504,6 g/mol; u.s.w.) unter der Annahme Fl.-% = Massen-%.

Der Phosphorgehalt der erfindungsgemäßen sowie der Vergleichsprodukte wurde durch Röntgenfluoreszenzanalyse (RFA) bestimmt.

Die Synthese der Verbindungen der Formel (I) erfolgt nach literaturbekannten Methoden durch Standardreaktionen zur P-C-Bindungsknüpfung (P-III-Verbindungen) optional gefolgt von einer Oxidation (P-Oxide). Hierfür geeignet sind funktionalisierte POSS-Precursoren einerseits (Halogenalkyl-POSS bzw. Vinyl- oder Allyl-POSS) und sekundäre Phosphane andererseits, die z.B. durch radikalische Addition an die Doppelbindung der Vinyl- oder Allyl-POSS-Bausteile bzw. nach Deprotonierung durch Halogenidabspaltung an die Halogenalkyl-POSS-Verbindungen gebunden werden können. Alle Ausgangsstoffe, sofern nicht kommerziell erhältlich (Fa. Aldrich, Fa. ABCR, Fa. Hybrid Catalysis, Fa. Solvay (vormals Cytec), Fa. DuPont, Fa. Covestro Deutschland AG) wurden nach literaturbekannten Methoden synthetisiert.

Exemplarisch für das allgemeine Vorgehen bei der Synthese der Verbindungen der Formel (I) ist nachfolgend die einer C4-verbrückten Spezies über den Halogenalkyl-POSS-Pfad im Bsp. 1 und die einer C3-verbrückten Spezies über den Allyl-POSS-Pfad im Bsp. 2 angeführt. Durch Zugabe mindestens stöchiometrischer Mengen an Cumylhydroperoxid zu den P-III-Verbindungen A bis D wurden die entsprechenden P-V-Verbindungen (P-Oxide) **E** und **F** in nahezu quantitativer Ausbeute erhalten.

Die als Katalysatoren in den erfindungsgemäßen Ausführungsbeispielen verwendeten Verbindungen A bis F sind in Tabelle 1 aufgeführt.

**Tabelle 1: Übersicht der in den erfindungsgemäßen Beispielen verwendeten Katalysatoren**

| Nr. | Strukturformel | Trivialname |
|---|---|---|
| **A** | 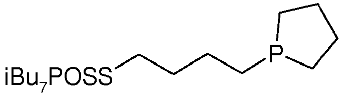 | *i*Bu₇POSS-butylen-phospholan |
| **B** | 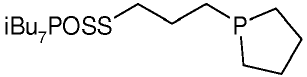 | *i*Bu₇POSS-propylen-phospholan |
| **C** | 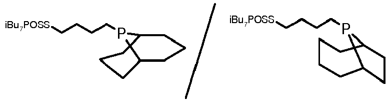 | *i*Bu₇POSS-butylen-phoban, Isomerengemisch |
| **D** | 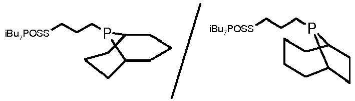 | *i*Bu₇POSS-propylen-phoban, Isomerengemisch |
| **E** | 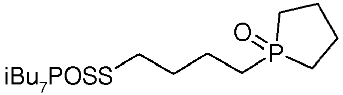 | *i*Bu₇POSS-butylen-phospholanoxid |
| **F** | 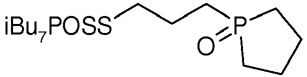 | *i*Bu₇POSS-propylen-phospholanoxid |

*i*Bu₇POSS = 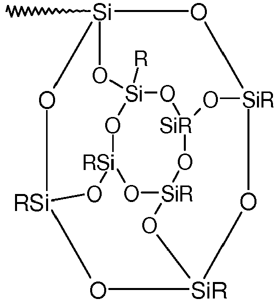 mit R = *i*Bu und 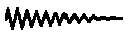 Verbindung zum P-substituierten Alkylenspacer

### Beispiel 1 Katalysatorsynthese, iBu₇POSS-butylen-phospholan A

In einem ausgeheizten Schlenkrohr wurden 0,96 g (10,94 mmol) Phospholan unter Stickstoffatmosphäre in 3 ml sauerstofffreiem, trockenem THF gelöst und auf -78 °C gekühlt. 3,67 g (13,23 mmol) *n*-Butyllithium wurden als 2,5 M Lösung in *n*-Hexan tropfenweise hinzugegeben. Die Reaktionsmischung wurde auf Zimmertemperatur gebracht, eine Stunde gerührt und erneut auf -78°C gekühlt. Anschließend wurde eine sauerstofffreie Lösung von 10,75 g (11,28 mmol) *i*Bu₇POSS-butylenbromid in 25 ml THF tropfenweise zur Phosphidlösung gegeben. Nach vollständiger Zugabe wurde die Reaktionsmischung bei Zimmertemperatur über Nacht gerührt, anschließend unter vermindertem Druck auf ca. 10 ml eingeengt und unter Rühren mit sauerstofffreiem Methanol (50 ml) versetzt. Filtration und mehrmaliges Waschen des ausgefallenen Niederschlags mit sauerstofffreiem Methanol lieferte 8,80 g (9,17 mmol, 83,9 % d. Th.) Katalysator A als weißen Feststoff.

¹H-NMR (600 MHz, C₆D₆): δ(ppm) = 2.23 - 2.02 (m, 7H, C*H*), 1.76 - 1.68 (m, 2H, C*H*₂), 1.66 - 1.42 (m, 4H, C*H*₂), 1.34 - 1.25 (m, 2H, C*H*₂), 1.22 - 1.14 (m, 2H, C*H*₂), 1.13 - 1.06 (m, 42H, C*H*₃), 0.90-0.81 (m, 16H, C*H*₂). ¹³C-NMR (151 MHz, C₆D₆): δ(ppm) = 30.7, 29.6, 29.5, 28.3, 26.6, 26.5, 26.2, 24.7, 24.7, 23.3, 12.8.

³¹P-NMR (243 MHz, C₆D₆): δ(ppm) = -27.2.

²⁹Si-NMR (119 MHz, C₆D₆): δ(ppm) = -66.7, -67.3, -67.6.

### Beispiel 2 Katalysatorsynthese, iBu₇POSS-propylen-phoban (Isomerengemisch) D

9 g (10,4 mmol) Allyl-heptaisobutyl-POSS wurden in einem vorher ausgeheizten Schlenkrohr unter Stickstoffatmosphäre in entgastem Toluol (20 ml) gelöst, mit 1,42 g (10 mmol) Phoban (Isomerengemisch, als 50%ige Lösung in Toluol) versetzt und unter Rückfluss und gelegentlicher Zugabe von summarisch 200 mg Azo-Initiator VAZO 76 (2,2'-Azobis(2-methylbutyronitril), als 5%ige Lösung in Toluol) über einen Zeitraum von 6 Stunden umgesetzt.

Nach Entfernen aller flüchtigen Komponenten im Vakuum (0,1 mbar) bei maximal 150°C wurden 8,5 g (8,5 mmol; 85% Ausbeute) des Katalysators D als weißes Pulver erhalten. Die analytischen Daten unterscheiden sich nicht von dem Produkt welches gemäß der unter Bsp. 1 beschriebenen Methode aus 3-Chlorpropyl-heptaisobutyloctasilsesquioxan und mittels *n*-Butyllithium deprotonierten Phobans erhalten wurde.

### Beispiel 3 Löslichkeitsuntersuchungen an HDI-Derivaten

Um zu überprüfen, ob *iso-*Octan als unpolares Lösemittel für eine zweiphasige Oligomerisierung geeignet ist, wurden zunächst die Löslichkeiten von HDI einerseits und der HDI-Oligomeren mit niedrigstem Molekulargewicht ("Idealstrukturen", s. unten) andererseits in *iso-*Octan ermittelt. HDI hat auch bei Zimmertemperatur keine Mischungslücke mit *iso*-Octan. Die jeweiligen "Idealstrukturen", d.h. die Verbindungen mit jeweils minimal möglichem Molekulargewicht und damit höchstmöglicher potenzieller Löslichkeit in unpolaren Lösemitteln, wurden aus den kommerziell erhältlichen HDI-Polyisocyanaten der Fa. Covestro Deutschland AG (Desmodur N 3300, Desmodur N 3400, Desmodur N 3900) in Anlehnung an die in EP 0798299, Bsp. 3 und 6 beschriebene Verfahrensweise isoliert (s. auch ACS Sustainable Chem. Eng. 2018, 6, 9753-9759) und deren Löslichkeit in *iso-*Octan bei 23°C und bei 60°C bestimmt. Die Ergebnisse sind in Tabelle 2 dargestellt.

**Tabelle 2: Löslichkeiten ausgewählter HDI-Oligomere ("Idealstrukturen") in iso-Octan^{a)}**

| Oligomer - "Idealstruktur" | Löslichkeit bei 23°C [%] | Löslichkeit bei 60°C [%] |
|---|---|---|
| Bis-6-isocyanatohexyluretdion ("Dimer") | 2,3 | 5,7 |
| Tris-6-isocyanatohexylisocyanurat ("Trimer") | 0,7 | 2,0 |
| Tris-6-isocyanatohexyl-iminooxadiazindion / -isocyanurat ca. 40%/60% Gemisch ("asymmetrisch/symmetrisch Trimer") | 1,0 | 3,1 |

| | | |
|---|---|---|
| *a) ermittelt durch ¹H-NMR* | | |

Wie sich hieraus ergibt, sind die Löslichkeiten selbst bei 60°C relativ gering, weshalb *iso-*Octan gut für die Extraktion eines unpolaren POSS-gebundenen Katalysators aus einem HDI und seine Oligomeren enthaltenden Produktgemisch sowie für eine zweiphasige Reaktionsführung geeignet sein sollte.

Zur Untersuchung anderer Monomere und daraus resultierender Oligomere lassen sich mit beliebigen Lösemitteln bzw. Lösemittelkombinationen leicht analoge Vorversuche zur Überprüfung der Eignung der jeweiligen Lösemitteln bzw. Lösemittelkombinationen für den beabsichtigten Zweck ableiten.

### Beispiele 4-7 (erfindungsgemäß) einphasig geführte Oligomerisierungen mit anschließender Extraktion der Katalysatoren

Zur Untersuchung der katalytischen Aktivität und Selektivität der Katalysatoren **A** bis **D** wurde unter Stickstoffatmosphäre der jeweilige Phosphor(III)katalysator **A** bis **D** (0,28 mmol) in *iso-*Octan (1 ml) gelöst und mit 14,2 g Hexamethylendiisocyanat (Produkt der Fa. Covestro Deutschland AG) versetzt. Die Lösungen wurden auf 60 °C erwärmt und in regelmäßigen Abständen der Umsatz und die Produktselektivität hinsichtlich der gebildeten IsocyanatFolgeprodukte mittels ¹H-NMR untersucht. Die Bestimmung von Mn, Mw und D erfolgte wie eingangs beschrieben unter Vernachlässigung des Monomeranteils.

Dabei zeigte sich, dass sowohl Turnover Frequenz (TOF) als auch Selektivität hinsichtlich der gebildeten Strukturtypen (Isocyanurat, Iminooxadiazindion und Uretdion) der Katalysatoren **A** bis **D** sehr ähnlich denen der nicht POSS-gebundenen Pendants - wie in EP 08004769 gezeigt - sind.

Die Rückgewinnung der Katalysatoren erfolgte durch Verdünnen der Reaktionsgemische mit Acetonitril (10 ml) und anschließender Extraktion mit *iso-*Octan (3x20 ml) in einem Scheidetrichter aus der polaren, Acetonitril-reichen Phase. Der Phosphorgehalt der polaren, Acetonitril-reichen Phase lag unterhalb 5 ppm P (unterhalb der Nachweisgrenze).

### Beispiele 8 und 9 (erfindungsgemäß) zweiphasig geführte Oligomerisierung mit anschließender chemischer Deaktivierung des Katalysators und Lösemittelabtrennung

Für die zweiphasigen Oligomerisierungen wurde Katalysator **C**:
0,41 g (0,45 mmol) Beispiel **8**
bzw.
3,28 g (3,6 mmol) Beispiel **9**
unter Stickstoffatmosphäre in *iso-*Octan (20 ml) gelöst und HDI (13,8 g, 82 mmol) hinzugegeben.

Die homogenen, klaren Reaktionslösungen wurden auf 60 °C erwärmt und mit Hilfe eines Rührwerks auf niedrigster Stufe (39 min⁻¹), um Emulsionsbildung zu vermeiden, gerührt. In beiden Fällen trat nach einiger Zeit (Beispiel **8**: 3 h; Beispiel **9**: 30 min) Phasenseparation durch Abscheidung des gebildeten HDI-Oligomerengemisches ein. Der Reaktionsabbruch erfolgte durch Zugabe elementaren Schwefels (15 mg, Beispiel **8**, bzw. 120 mg, Beispiel **9**) und weiteres, einstündiges Rühren bei 60°C und höherer Drehzahl des Rührwerks (400 min⁻¹). Anschließend wurde bei 60°C unter stufenweise vermindertem Druck das gesamte Lösemittel entfernt und die verbleibenden, viskosen Rückstände mittels ¹H-NMR-Spektroskopie und Größenausschlußchromatografie analysiert. Die Ergebnisse sind in Tabelle 3 zusammengefasst. Zum Vergleich ist das Ergebnis aus Beispiel **6**, welches ebenfalls mit Katalysator **C** bis zu einem mit Beispiel **9** vergleichbaren Brutto-Monomerumsatz gefahren wurde (ca. 20% Monomer lt. Größenausschlußchromatografie) mit aufgeführt.

**Tabelle 3: Vergleich der homogen (Beispiel 6) und heterogen (Beispiele 8 und 9) geführten HDI-Oligomerisierungen**

| Bsp. | Isocyanurate | Iminooxadiazindione | Oxadiazintrione | Uretdione | Mn | Mw | D |
|---|---|---|---|---|---|---|---|
| **8** | 61 mol-% | 23 mol-% | 2 mol-% | 14 mol-% | 565 | 616 | 1,1 |
| **9** | 66 mol-% | 22 mol-% | 1 mol-% | 10 mol-% | 735 | 851 | 1,2 |
| **6** | 68 mol-% | 21 mol-% | 1 mol-% | 10 mol-% | 1092 | 1550 | 1,4 |

Wie man den Ergebnissen entnehmen kann, wird bei heterogener Reaktionsführung eine deutlich engere Molekulargewichtsverteilung (niedrigerer Wert für die Polydispersität D bei vergleichbarem Monomerumsatz) gefunden, als im durchgängig homogen katalysierten Fall. Durch Wahl der Reaktionstemperatur, der Reaktionszeit (und damit des Monomer-Umsatzes), der Katalysatorkonzentration (-menge) und der Menge des unpolaren Lösemittels (Anfangsverdünnung) ist die Polydispersität der erhaltenen Produkte weiter variierbar.

Die chemische Deaktivierung des Katalysators erfolgte hier nur zur Vereinfachung der analytischen Beurteilung des erfindungsgemäßen Effektes: engere Molekulargewichtsverteilung im Vergleich zum homogen katalysierten Fall bei vergleichbarem Monomerumsatz und kann bei kontinuierlicher Reaktionsführung unter ständiger Abtrennung der Produkt-reichen Phase und synchronem Zuführen frischen Monomers unterbleiben.

Eine ggf. erwünschte Abtrennung nicht umgesetzten Monomers aus der polaren, Katalysator-armen bis -freien Produktphase kann im Anschluss nach beliebigen Methoden des Standes Technik, bevorzugt (weitere) Extraktion mit unpolarem Lösemittel und/oder Destillation erfolgen. Dabei profitiert man vom weitgehenden Verbleib des Katalysators in der wenig Oligomer (im Wesentlichen geringe Anteile der "Idealstrukturen" wie in Bsp. 3 aufgeführt), Monomer und unpolares Lösemittel führenden Phase, die sämtlich recycliert werden können und der fast völligen Abwesenheit des Katalysators im Produkt, was das Verfahren auch unter ökologischen und ökonomischen Aspekten sehr lukrativ erscheinen lässt.

### Beispiele 10 und 11 (erfindungsgemäß) sowie 12 (Vergleich)

Zur Untersuchung der katalytischen Aktivität und Selektivität der Katalysatoren **E** und **F** und des nicht erfindungsgemäßen Vergleichskatalysators 1-Methylphospholanoxid (MPO) wurde unter Stickstoffatmosphäre der jeweilige Phosphor(V)katalysator **E, F** und MPO (jeweils 5 mmol; **E** und **F** jeweils in 3 ml *iso-*Octan gelöst, MPO in Substanz,) und mit 100 g (0,38 mol) Bis-(4-isocyanatocyclohexyl)methan (Desmodur W; Produkt der Fa. Covestro Deutschland AG) versetzt. Die Mischungen wurden auf 160 °C erwärmt und im Verlaufe von 10 h in regelmäßigen Abständen der Umsatz mittels NCO-Titration verfolgt, s. Tabelle 4.

**Tabelle 4: Desmodur W Carbodiimidisierungen (10 und 11: erfindungsgemäß, 12: Vergleich)**

| Bsp. | Katalysator | Umsatz nach 10 h |
|---|---|---|
| **10** | **E** | 35 % |
| **11** | **F** | 24 % |
| **12** | **MPO** | 35 % |

Zum Reaktionsabbruch wurde abgekühlt, mit Acetonitril verdünnt und anschließend die Acetonitrilphase mittels *iso-*Octan analog zum Vorgehen in Beispiel **4-7** extrahiert.

Der Phosphorgehalt der polaren, Acetonitril-reichen Phase lag bei den erfindungsgemäßen Versuchen **10** und **11** unterhalb 5 ppm P (unterhalb der Nachweisgrenze).

Das intensive Signal des **MPO** bei ca. 67 ppm im ³¹P-NMR-Spektrum des Produktes aus dem Vergleichsversuch **12** belegte die erwartungsgemäß schlechte Extrahierbarkeit des Katalysators im Vergleichsversuch **12,** röntgenfluoreszensspektroskopisch wurden 567 ppm P gefunden.

## Patentansprüche

1. Verbindung der allgemeinen Formel (I)
[(R¹SO_{3/2})ₙ₋₁(R²SiO_{3/2})]ₙ. (I)
worin
n für eine grade Zahl von 6 bis 18 steht,
jeder Rest R¹ unabhängig voneinander
ein verzweigter oder unverzweigter C₁₋₂₀-Alkylrest,
ein verzweigter oder unverzweigter C₁₋₂₀-Alkenylrest,
ein verzweigter oder unverzweigter C₁₋₂₀-Alkinylrest,
ein C₄₋₁₂-Cycloalkylrest,
ein C₁₋₂₀-Oxoalkylrest,
ein C₆₋₁₈Arylrest,
ein Oxoarylrest,
ein Hetarylrest,
ein Perfluor-alkyl, -alkenyl, -alkinyl, -alkoxyalkyl- oder -arylrest, oder
ein Arylalkylrest ist, und
R² für ein Strukturelement der Formel (II) steht 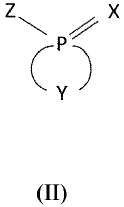 worin
Z ausgewählt ist aus der Gruppe bestehend aus (CR³₂)ₘ, *ortho-, meta-* oder *para-*C₆R³₄, C₆R³₄CR³₂, (CR³₂)₂-Si(R³₂)-(CR³₂)ₒ, C₄₋₁₂-Cycloalkylen,
und wobei m für eine natürliche Zahl von 1 bis 15 steht,
o für eine natürliche Zahl von 1 bis 4 steht,
R³ für gleiche oder verschiedene Substituenten ausgewählt aus der Gruppe bestehend aus H, Methyl und Ethyl steht,
Y für C₄₋₂₀-Alkylen oder polyzyklisches C₆₋₃₀-Alkylen steht und
X für ein freies Elektronenpaar oder ein O-Atom steht.

2. Die Verbindung nach Anspruch 1, wobei
n eine grade Zahl von 6 bis 12, bevorzugt von 6 bis 10, besonders bevorzugt 8 ist,
jeder Rest R¹ unabhängig voneinander
ein verzweigter oder unverzweigter C₁₋₁₀-Alkylrest, bevorzugt C₁₋₆-Alkyl und besonders bevorzugt iso-Butyl,
ein verzweigter oder unverzweigter C₁₋₁₀-Alkenyl, bevorzugt C₁₋₆-Alkenyl,
ein verzweigter oder unverzweigter C₁₋₁₀-Alkinyl, bevorzugt C₁₋₆-Alkinyl,
ein C₄₋₈-Cycloalkyl, bevorzugt C₄₋₆-Cycloalkyl,
ein C₆₋₁₂-Aryl, bevorzugt C₆₋₁₀ Aryl, optional jeweils substituiert mit einem Heteroatom, ist,
Z ausgewählt ist aus der Gruppe bestehend aus (CR³₂)ₘ, *ortho-, meta-* oder *para*-C₆R³₄, C₆R³₄CR³₂, C₄₋₁₂-Cycloalkylen,
m für eine natürliche Zahl von 1 bis 10, bevorzugt von 2 bis 5, besonders bevorzugt für 3 oder 4 steht,
R³ für H steht,
X für ein freies Elektronenpaar oder O-Atom steht und
Y für C₄₋₁₆-Alkylen steht, bevorzugt für C₄₋₁₀-Alkylen, besonders bevorzugt für C₄₋₈-Alkylen oder
Y für ein bicyclisches C₆₋₁₀-Alkylen steht.

3. Die Verbindung nach Anspruch 1 oder 2, wobei
n=8 ist,
R¹ C₄-Alkyl ist,
Z (CR³₂)ₘ mit m=3 oder m=4 und R³=Wasserstoff ist,
Y C₄-Alkylen oder Cs-Bicycloalkylen ist, und
X für ein freies Elektronenpaar oder O-Atom steht.

4. Verwendung einer Verbindung wie in einem der Ansprüche 1 bis 3 definiert zur Oligomerisierung von Isocyanaten.

5. Die Verwendung nach Anspruch 4, wobei das molare Verhältnis der Verbindung gemäß Formel (I) und der Gesamtmenge aller Isocyanate zwischen 5 ppm und 10 % liegt.

6. Die Verwendung nach Anspruch 4 oder 5, wobei X für ein freies Elektronenpaar steht und bei der Oligomerisierung wenigstens eine Struktur ausgewählt aus der Gruppe bestehend aus Isocyanurat, Iminooxadiazindion, Uretdion und besonders bevorzugt wenigstens eine Isocyanuratstruktur gebildet wird.

7. Die Verwendung nach Anspruch 6, wobei die Verbindung der Formel (I) in einer Reaktionslösung umfassend eine polare und eine unpolare Phase eingesetzt wird.

8. Die Verwendung nach Anspruch 4 oder 5, wobei X für Sauerstoff steht und die Oligomerisierung unter Ausbildung eines Carbodiimids abläuft.

9. Verfahren zur Herstellung einer Polyisocyanatzusammensetzung enthaltend oligomere Polyisocyanate enthaltend die Schritte
a) Bereitstellen eines Reaktionsgemisches enthaltend wenigstens eine Verbindung gemäß der allgemeinen Formel (I) wie in Anspruch 1 oder 2 definiert und wenigstens ein Isocyanat;
b) Umsetzung des wenigstens einen Isocyanats zu einem oligomeren Polyisocyanat;
c) Extraktion der Verbindung gemäß Formel (I) aus dem Reaktionsgemisch durch Extraktion mit einem Lösemittel A.

10. Das Verfahren nach Anspruch 9, wobei nach dem Extraktionsschritt c) wenigstens 90 % der zu Beginn des Verfahrensschritts c) im Reaktionsgemisch vorliegenden Gesamtmenge der Verbindung nach Formel (I) im Lösemittel A gelöst sind.

11. Das Verfahren nach Anspruch 9 oder 10, wobei das molare Verhältnis der Verbindung gemäß Formel (I) und der Gesamtmenge aller Diisocyanate im in Verfahrensschritt a) bereitgestellten Reaktionsgemisch zwischen 5 ppm und 10 % liegt.

12. Das Verfahren nach einem der Ansprüche 9 bis 11, wobei bezogen auf die Masse des Reaktionsgemisches wenigstens 10 Gew.-% Lösemittel A zur Extraktion verwendet werden.

13. Das Verfahren nach einem der Ansprüche 9 bis 12, wobei das Verfahren unter Zugabe eines mit dem Lösemittel A an sich oder in Gegenwart der oligomeren Polyisocyanatzusammensetzung eine Mischungslücke aufweisenden Lösemittels B durchgeführt wird und
(i) die Löslichkeit der Verbindung nach Formel (I) in Lösemittel A wenigstens um einen Faktor 10 höher ist als in Lösemittel B und
(ii) die Löslichkeit der in Verfahrensschritt b) gebildeten Oligomere in Lösemittel B wenigstens um einen Faktor von 10 höher als ist in Lösemittel A.

## Claims

1. Compound of the general formula (I)
[(R¹SiO_{3/2})ₙ₋₁(R²SiO_{3/2})]ₙ (I)
in which
n is an even number from 6 to 18,
each radical R¹ is each independently
a branched or unbranched C₁₋₂₀-alkyl radical,
a branched or unbranched C₁₋₂₀-alkenyl radical,
a branched or unbranched C₁₋₂₀-alkynyl radical,
a C₄₋₁₂-cycloalkyl radical,
a C₁₋₂₀-oxoalkyl radical,
a C₆₋₁₈-aryl radical,
an oxoaryl radical,
a hetaryl radical,
a perfluoro-alkyl, -alkenyl, -alkynyl, - alkoxyalkyl- or -aryl radical,
or
an arylalkyl radical, and
R² is a structural element of the formula (II) 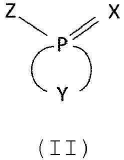 in which
Z is selected from the group consisting of (CR³₂)ₘ, *ortho-, meta-* or *para*-C₆R³₄, C₆R³₄CR³₂, (CR³₂)₂-Si(R³₂)- (CR³₂)ₒ, C₄₋₁₂-cycloalkylene, and wherein m is a natural number from 1 to 15, o is a natural number from 1 to 4,
R³ are the same or different substituents selected from the group consisting of H, methyl and ethyl,
Y is C₄₋₂₀-alkylene or polycyclic C₆₋₃₀-alkylene and
X is a free electron pair or an O atom.

2. The compound according to Claim 1, wherein
n is an even number from 6 to 12, preferably from 6 to 10, particularly preferably 8,
each radical R¹ is each independently
a branched or unbranched C₁₋₁₀-alkyl radical, preferably C₁₋₆-alkyl and particularly preferably isobutyl,
a branched or unbranched C₁₋₁₀-alkenyl, preferably C₁₋₆-alkenyl,
a branched or unbranched C₁₋₁₀-alkynyl, preferably C₁₋₆-alkynyl,
a C₄₋₈-cycloalkyl, preferably C₄₋₆-cycloalkyl,
a C₆₋₁₂-aryl, preferably C₆₋₁₀ -aryl, in each case optionally substituted by a heteroatom,
Z is selected from the group consisting of (CR³₂)ₘ, *ortho-, meta-* or *para*-C₆R³₄, C₆R³₄CR³₂, C₄₋₁₂-cycloalkylene,
m is a natural number from 1 to 10, preferably from 2 to 5, particularly preferably 3 or 4,
R³ is H,
X is a free electron pair or an O atom and
Y is C₄₋₁₆-alkylene, preferably C₄₋₁₀-alkylene, particularly preferably C₄₋₈-alkylene or
Y is a bicyclic C₆₋₁₀-alkylene.

3. The compound according to Claim 1 or 2, wherein
n = 8,
R¹ is C4-alkyl,
Z is (CR³₂)ₘ where m = 3 or m = 4 and R³ = hydrogen,
Y is C₄-alkylene or C₈-bicycloalkylene, and
X is a free electron pair or an O atom.

4. Use of a compound as defined in any of Claims 1 to 3 for the oligomerization of isocyanates.

5. The use according to Claim 4, wherein the molar ratio of the compound according to formula (I) and the total amount of all isocyanates is between 5 ppm and 10%.

6. The use according to Claim 4 or 5, wherein X is a free electron pair and in the oligomerization at least one structure is formed selected from the group consisting of isocyanurate, iminooxadiazinedione, uretdione, and particularly preferably at least one isocyanurate structure.

7. The use according to Claim 6, wherein the compound of formula (I) is used in a reaction solution comprising a polar and a non-polar phase.

8. The use according to Claim 4 or 5, wherein X is oxygen and the oligomerization proceeds with formation of a carbodiimide.

9. Process for producing a polyisocyanate composition comprising oligomeric polyisocyanates comprising the steps of
a) providing a reaction mixture comprising at least one compound according to the general formula (I) as defined in Claim 1 or 2 and at least one isocyanate;
b) reacting the at least one isocyanate to give an oligomeric polyisocyanate;
c) extracting the compound according to formula (I) from the reaction mixture by extraction with a solvent A.

10. The process according to Claim 9, wherein after the extraction step c), at least 90% of the total amount of the compound according to formula (I) present in the reaction mixture at the start of process step c) is dissolved in the solvent A.

11. The process according to Claim 9 or 10, wherein the molar ratio of the compound according to formula (I) and the total amount of all diisocyanates in the reaction mixture provided in process step a) is between 5 ppm and 10%.

12. The process according to any of Claims 9 to 11, wherein at least 10% by weight of solvent A is used for the extraction, based on the mass of the reaction mixture.

13. The process according to any of Claims 9 to 12, wherein the process is carried out with addition of a solvent B having a miscibility gap with the solvent A per se or in the presence of the oligomeric polyisocyanate composition and
(i) the solubility of the compound according to formula (I) in solvent A is higher than in solvent B by at least a factor of 10 and
(ii) the solubility of the oligomers formed in process step b) in solvent B is higher than in solvent A by at least a factor of 10.

## Revendications

1. Composé de formule générale (I)
[(R¹SiO_{3/2})ₙ₋₁(R²SiO_{3/2})]ₙ (I)
dans laquelle
n représente un nombre pair de 6 à 18,
chaque radical R¹ représente, indépendamment des autres
un radical alkyle en C₁₋₂₀ ramifié ou non ramifié,
un radical alcényle en C₁₋₂₀ ramifié ou non ramifié,
un radical alcynyle en C₁₋₂₀ ramifié ou non ramifié,
un radical cycloalkyle en C₄₋₁₂,
un radical oxoalkyle en C₁₋₂₀,
un radical aryle en C₆₋₁₈,
un radical oxoaryle,
un radical hétéroaryle,
un radical perfluoro-alkyle, -alcényle, -alcynyle, -alcoxyalkyle ou -aryle,
ou
un radical arylalkyle, et
R² représente un élément structural de formule (II) 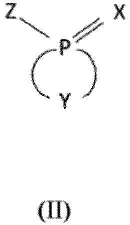 dans laquelle
Z est choisi dans le groupe consistant en (CR³₂)ₘ, *ortho-, méta-* ou para- C₆R³₄, C₆R³₄CR³₂, (CR³₂)₂-Si (R³₂) - (CR³₂)₀, un cycloalkylène en C₄₋₁₂,
et m représente un nombre entier de 1 à 15,
o représente un nombre entier de 1 à 4,
R³ représente des substituants identiques ou différents choisis dans le groupe consistant en H, un méthyle et un éthyle,
Y représente un alkylène en C₄₋₂₀ ou un alkylène en C₆₋₃₀ polycyclique et
X représente une paire d'électrons libres ou un atome O.

2. Composé selon la revendication 1, dans lequel
n représente un nombre pair de 6 à 12, de préférence de 6 à 10, d'une manière particulièrement préférée 8,
chaque radical R¹ représente indépendamment des autres
un radical alkyle en C₁₋₁₀ ramifié ou non ramifié, de préférence un alkyle en C₁₋₆ et d'une manière particulièrement préférée un isobutyle,
un alcényle en C₁₋₁₀ ramifié ou non ramifié, de préférence un alcényle en C₁₋₆,
un alcynyle en C₁₋₁₀ ramifié ou non ramifié, de préférence un alcynyle en C₁₋₆,
un cycloalkyle en C₄₋₈, de préférence un cycloalkyle en C₄₋₆,
un aryle en C₆₋₁₂, de préférence un aryle en C₆₋₁₀, éventuellement chacun étant substitué par un hétéroatome,
Z est choisi dans le groupe consistant en (CR³₂)ₘ, *ortho, méta-* ou *para*-C₆R³₄, C₆R³₄CR³₂, un cycloalkylène en C₄₋₁₂,
m représente un nombre entier de 1 à 10, de préférence de 2 à 5, d'une manière particulièrement préférée 3 ou 4,
R³ représente H,
X représente une paire d'électrons libres ou un atome O et
Y représente un alkylène en C₄₋₁₆, de préférence un alkylène en C₄₋₁₀, d'une manière particulièrement préférée un alkylène en C₄₋₈
ou
Y représente un alkylène en C₆₋₁₀ bicyclique.

3. Composé selon la revendication 1 ou 2, dans lequel
n = 8,
R¹ représente un alkyle en C₄,
Z représente (CR³₂)ₘ avec m = 3 ou m = 4 et R³ = un hydrogène,
Y représente un alkylène en C₄ ou un bicycloalkylène en C₈, et
X représente une paire d'électrons libres ou un atome O.

4. Utilisation d'un composé tel que défini dans l'une des revendications 1 à 3 pour l'oligomérisation d'isocyanates.

5. Utilisation selon la revendication 4, le rapport en moles du composé de formule (I) à la quantité totale de tous les isocyanates étant compris entre 5 ppm et 10 %.

6. Utilisation selon la revendication 4 ou 5, X représentant une paire d'électrons libres, et au moins une structure choisie dans le groupe consistant en un isocyanurate, une iminooxadiazinedione, une uret-dione et d'une manière particulièrement préférée une structure isocyanurate étant formée lors de l'oligomérisation.

7. Utilisation selon la revendication 6, le composé de formule (I) étant utilisé dans une solution réactionnelle comprenant une phase polaire et une phase apolaire.

8. Utilisation selon la revendication 4 ou 5, X représentant un oxygène et l'oligomérisation se déroulant avec formation d'un carbodiimide.

9. Procédé de fabrication d'une composition de polyisocyanates contenant des polyisocyanates oligomères, contenant les étapes suivantes :
a) fourniture d'un mélange réactionnel contenant au moins un composé selon la formule générale (I) telle que définie dans la revendication 1 ou 2 et au moins un isocyanate ;
b) réaction de l'au moins un isocyanate pour donner un polyisocyanate oligomère ;
c) extraction du composé de formule (I) du mélange réactionnel par extraction avec un solvant A.

10. Procédé selon la revendication 9, au moins 90 % de la quantité totale du composé de formule (I) présente dans le mélange réactionnel au début de l'étape de procédé c) étant, après l'étape d'extraction c), en solution dans le solvant A.

11. Procédé selon la revendication 9 ou 10, le rapport en moles du composé de formule (I) à la quantité totale de tous les diisocyanates dans le mélange réactionnel fourni dans l'étape de procédé a) étant compris entre 5 ppm et 10 %.

12. Procédé selon l'une des revendications 9 à 11, au moins 10 % en poids du solvant A, par rapport à la masse du mélange réactionnel, étant utilisés pour l'extraction.

13. Procédé selon l'une des revendications 9 à 12, le procédé étant mis en œuvre par addition d'un solvant B présentant une lacune de mélange avec le solvant A en tant que tel ou en mélange de la composition de polyisocyanates oligomères, et
(i) la solubilité du composé de formule (I) dans le solvant A étant au moins d'un facteur 10 supérieure à celle dans le solvant B et
(ii) la solubilité des oligomères formés dans l'étape de procédé b) dans le solvant B étant d'au moins un facteur 10 supérieure à celle dans le solvant A.
